# DEMANDE DE BREVET EUROPEEN

(11) **EP 2 799 411 A1**
(43) Date de publication de la demande: **05.11.2014**
(21) Numéro de dépôt: 13166502.8
(22) Date de dépôt: 03.05.2013
(51) Int. Cl.: C04B 35/48

(54) **Procédé de fabrication d'un article coloré; en particulier de couleur orange; à base de zircone et article décoratif coloré à base de zircone obtenu selon ce procédé**

(71) Demandeur: Comadur S.A., 2400 Le Locle (CH)
(72) Inventeur: Actis-Datta Arnaud, 1950 Sion (CH)
(74) Mandataire: Ravenel, Thierry Gérard Louis

(57) **Abrégé**

L'invention concerne un procédé de fabrication d'un article orange à base de zircone caractérisé par le fait qu'il comprend les étapes successives consistant à réaliser un premier mélange comprenant une poudre de zircone, 3 à 20 % en poids d'au moins un stabilisant choisi parmi l'ensemble des oxydes comprenant l'oxyde d'yttrium, l'oxyde de magnésium, et l'oxyde de calcium seuls ou en combinaison, 0,1 % à 5 % en poids d'au moins un élément destiné à réaliser une phase vitreuse, et choisi parmi l'ensemble comprenant de l'oxyde de silicium, de l'oxyde d'aluminium, de l'oxyde lithium et de l'oxyde d'yttrium seuls ou en combinaison, 1 % à 6% en poids d'une poudre d'oxyde de cérium; réaliser un deuxième mélange comprenant ledit premier mélange et un liant; réaliser un mélange granulé en opérant une granulation dudit deuxième mélange; former une ébauche en conférant à ce deuxième mélange granulé la forme de l'article désiré; fritter sous air pendant au moins trente minutes à une température comprise entre 1'250 et 1'500 DEG. C, et recuire l'article désiré à une température comprise entre 700 DEG. C et 1'350 DEG. C pendant une période comprise entre 30 minutes et 20 heures dans une atmosphère réductrice et polir ladite ébauche frittée.

## Description

L'invention concerne un procédé de fabrication d'un article coloré à base de zircone, en particulier d'un tel article présentant une couleur comprise dans la gamme de l'orange vif au brun cuivreux et réalisé par frittage. Un tel article sera désigné dans la suite de la description "article orange " pour des raisons de commodités.

L'invention concerne également un article décoratif orange à base de zircone notamment obtenu selon le procédé ci-dessus.

Il est déjà connu d'incorporer des agents colorants ou pigments tels que le sulfure de cadmium (CdS), le séléniure de cadmium (CdSe) et le sulfoséléniure de Cadmium dans des matériaux céramique pour obtenir des articles en céramique orange/rouge utilisés par exemple pour réaliser des émaux, des glaçures et des récipients à usage domestique ou des revêtements de sols.

L'utilisation de ce type d'agents colorants présente de nombreux inconvénients dès lors que l'on souhaite incorporer ce type d'agents colorants dans des céramiques industrielles notamment à base de zircone frittée.

En effet, ces agents colorants manquent de stabilité à température élevée et ne présentent leurs caractéristiques colorantes que jusqu'à 1'000 ou 1'200 DEG. C. Cela limite grandement l'utilisation de ce type d'agents colorants et ne permet notamment pas la réalisation d'articles à base de zircone frittée, les températures de frittage de la zircone étant dans tous les cas supérieures à 1'100 DEG. C.

Par ailleurs, l'utilisation de ces types d'agents colorants, qui contiennent des métaux lourds, dans des objets destinés à être en contact avec la peau d'un utilisateur tel qu'une boîte de montre est sinon interdite légalement, du moins fortement déconseillée.

De plus, les agents colorants de ce type, disponibles commercialement ont une granulométrie incompatible pour l'obtention d'un mélange homogène avec la poudre de zircone.

L'invention a donc pour but principal de fournir d'une part un procédé de fabrication d'un article orange vif à base de zircone frittée et d'autre part un tel article notamment obtenu selon ce procédé, cet article ayant des propriétés mécaniques satisfaisantes tout en présentant une coloration orange vive au moins sur une profondeur de 5 mm.

A cet effet, l'invention a pour objet un procédé de fabrication d'un article orange vif à base de zircone caractérisé par le fait qu'il comprend les étapes successives consistant à :
réaliser un premier mélange comprenant.
   - une poudre de zircone,
   - 3 à 20 % en poids d'au moins un stabilisant choisi parmi l'ensemble des oxydes comprenant l'oxyde d'yttrium, l'oxyde de magnésium, et l'oxyde de calcium seuls ou en combinaison,
   - 0,1 % à 5 % en poids d'au moins un élément destiné à réaliser une phase vitreuse, et choisi parmi l'ensemble comprenant de l'oxyde de silicium, de l'oxyde d'aluminium, de l'oxyde lithium et de l'oxyde d'yttrium seuls ou en combinaison,
   - 1 % à 6% en poids d'une poudre d'oxyde de cérium;
réaliser un deuxième mélange comprenant ledit premier mélange et un liant;
réaliser un mélange granulé en opérant une granulation dudit deuxième mélange;
former une ébauche en conférant à ce deuxième mélange granulé la forme de l'article désiré;
fritter sous air pendant au moins trente minutes à une température comprise entre 1'250 et 1'500 DEG. C, et
recuire l'article désiré à une température comprise entre 700 DEG. C et 1'350 DEG. C pendant une période comprise entre 30 minutes et 20 heures dans une atmosphère réductrice ayant une pression partielle d'oxygène comprise entre 10⁻⁶ et 10⁻¹ atmosphère, et
polir ladite ébauche frittée.

Le procédé de l'invention permet par l'incorporation de poudre d'oxyde de cérium (CeO₂) dans le mélange à fritter, une diminution des températures de frittage. L'oxyde de cérium agit aussi comme un des éléments déterminant dans la coloration orange que l'on souhaite donner à l'article.

En effet, la couleur de l'article après l'opération de frittage en présence de CeO₂ est blanc ivoire. Puis au cours d'une étape ultérieure du procédé de l'invention, appelée étape de recuit, on profite de la présence de CeO₂ (état d'oxydation +4) pour le réduire en Ce₂O₃ (état d'oxydation +3). Après cette étape de recuit l'article présente une couleur située dans la gamme allant du jaune orangé à l'orange vif en fonction des quantités respectives de cérium aux états d'oxydation +4, +3 présentes aux joints de grains. La couleur de l'oxyde de cérium (CeO₂) correspondant à l'état d'oxydation +4 est blanc ivoire et la couleur de l'oxyde de cérium (Ce2O₃) correspondant à l'état d'oxydation +3 est orange vif.

Les quantités respectives d'oxydes de cérium correspondant aux états d'oxydation +4, +3 présentes aux joints de grains sont déterminées par les conditions du recuit, plus précisément en faisant varier la pression partielle d'oxygène dans l'environnement du four où a lieu le recuit.

Selon un mode de réalisation, le premier mélange comprend entre 0,1 et 1 % en poids de poudres d'oxydes pour la phase vitreuse et de préférence entre 4 et 5 % en poids de poudre d'oxyde de cérium (Ce⁺⁴ 02).

L'invention a également pour objet un article décoratif orange vif à base de zircone obtenu notamment selon le procédé décrit ci-dessus, **caractérisé en ce qu'il** est constitué d'une pièce frittée à partir d'une pièce moulée comprenant en substance une matrice d'oxyde de zirconium, 3 à 20 % en poids d'au moins un stabilisant choisi parmi l'ensemble des oxydes comprenant l'oxyde d'yttrium, l'oxyde de magnésium, et l'oxyde de calcium seuls ou en combinaison, 0,1 à 5 % en poids d'une phase vitreuse, comprenant au moins un élément choisi parmi l'ensemble comprenant de l'oxyde de silicium, de l'oxyde d'aluminium, de l'oxyde lithium et de l'oxyde d'yttrium, seuls ou en combinaison et 1 % à 6 % en poids d'oxyde de cérium.

De tels articles ont l'avantage de présenter un brillant intense après polissage et sont ainsi particulièrement adaptés à la réalisation d'articles décoratifs tels que des éléments constitutifs de boîtes de montre, des bijoux, des bracelets, des broches, des épingles de cravate, des colliers, des sacs à main, des téléphones, du mobilier, ou des ustensiles ménagers.

D'autres caractéristiques et avantages de l'invention apparaîtront à la lumière de la description qui suit d'un exemple de réalisation du procédé de l'invention.

Le procédé de fabrication de l'invention qui va maintenant être décrit en détail est celui qui permet de réaliser un article à base de zircone frittée orange vif dont l'aspect et les propriétés mécaniques sont particulièrement adaptés à la réalisation de pièces constitutives de montres bracelet ou à la réalisation de tout autre article décoratif.

L'article en zircone orange vif obtenu selon ce procédé comprend 89 à 98,9 % en poids de zircone stabilisée et le complément en poids c'est-à-dire 0,1 à 5 % en poids d'une phase vitreuse réalisée à base d'oxyde de silicium, d'oxyde d'aluminium, d'oxyde d'yttrium et d'oxyde de lithium seuls ou en combinaison, et de 1 % à 6 % en poids d'oxyde de cérium.

La zircone est stabilisée de façon classique en phase tétragonale par au moins un stabilisant choisi parmi l'ensemble des oxydes comprenant l'oxyde d'yttrium, l'oxyde de magnésium, et l'oxyde de calcium seuls ou en combinaison, ce stabilisant étant en quantité de 3 à 20 % en poids par rapport à la zircone.

Pour réaliser cet article, on procède selon un exemple de mise en oeuvre du procédé de l' invention de la façon suivante :

On pèse 943 grammes de poudre de zircone stabilisée à 3 % en poids d'oxyde d'yttrium. La poudre utilisée a une taille granulométrique moyenne de l'ordre du micromètre ou submicrométrique, typiquement, de 0,5 micromètre. Une telle poudre est vendue sous la référence TZ-3Y par la société Tosoh Corporation, Japon.

On pèse ensuite 7 grammes d'un mélange de poudre d'oxyde de silicium, d'oxyde d'aluminium, et d'oxyde de lithium qui sera destiné à former une phase vitreuse au moment du frittage ultérieur.

De préférence, la phase vitreuse comprend à teneur décroissante en poids un mélange ou une combinaison de l'oxyde de silicium, de l'oxyde d'aluminium et de l'oxyde de lithium respectivement 47%, 40% et 13%,

La poudre de silicium utilisée a une taille granulométrique moyenne inférieure au micromètre, typiquement 40 nanomètres et est vendue sous le nom Aerosil OX50 par la société Cerdec, Allemagne.

La poudre d'oxyde d'aluminium utilisée a une taille granulométrique moyenne de l'ordre de grandeur du micromètre ou submicrométrique typiquement 0,5 micromètre et est vendue sous le nom CR30 par la société Baikowski, France.

La poudre d'oxyde de lithium utilisée a une taille granulométrique moyenne de l'ordre de grandeur du micromètre ou submicrométrique, typiquement de 2,4 micromètres et est vendue sous la référence No 374725 par la société Sigma Aldrich Chemie, Suisse. Le cas échéant la poudre est broyée pour atteindre la granulométrie souhaitée.

On pèse enfin 50 grammes d'oxyde de cérium (Ce⁴⁺ O), la poudre utilisée a une taille granulométrique de l'ordre de grandeur du micromètre ou submicrométrique, typiquement 0, 5 micromètre et est vendue sous la référence No 202975 par Sigma Aldrich Chemie, Suisse.

On notera que toutes ces poudres doivent de préférence présenter une pureté supérieure à 95%.

Une fois le pesage des poudres terminé, l'ensemble de ces poudres sont mélangées et homogénéisées en milieu humide. Dans la phase finale d'homogénéisation, on ajoute environ 50 grammes d'un liant, par exemple un alcool polyvinylique.

On procède ensuite au séchage du mélange par exemple dans un atomiseur classique.

Le granulé obtenu est tamisé pour conserver les particules ayant une granulométrie inférieure à 200 micromètres.

Le granulé tamisé est ensuite pressé dans un moule ayant la configuration de l'article que l'on désire obtenir afin de former une ébauche de ce dernier.

L'article dans sa forme générale quasi finale est placé dans un four de frittage. On notera à ce propos que le frittage peut être effectué sous air. L'article est alors chauffé dans une première phase à une vitesse de 30 DEG. par heure jusqu'à environ 1'000 DEG. C, puis dans une deuxième phase à une vitesse de 50 DEG. par heure jusqu'à la température de 1'250 DEG. C. L'article est maintenu à cette température pendant au moins trente minutes et de préférence pendant une heure.

On notera que le frittage peut bien entendu être effectué à toute autre température supérieure ou égale à 1'100 DEG. et inférieure à 1'600 DEG. C.

Au cours du frittage, l'oxyde de silicium, l'oxyde d'aluminium, l'oxyde d'yttrium et l'oxyde de lithium forment une phase vitreuse qui vient se concentrer avec l'oxyde de cérium à l'état d'oxydation +4 aux joints de grains, ce qui confère une couleur ivoire à l'article après le frittage.

On notera que la présence notamment d'oxyde de lithium diminue avantageusement la température de frittage et permet limiter la transformation de la couleur de l'oxyde cérium et d'obtenir une couleur orange vif.

Après cette opération de frittage l'article est placé dans un four de recuit dans lequel il est possible de choisir l'atmosphère. L'article désiré est recuit soit dans une atmosphère d'hydrogène (H2 ), soit dans une atmosphère comportant un mélange d'azote et d'hydrogène (N2 /H2 ) ou un mélange d'argon et d'hydrogène.

Au cours de cette opération de recuit, la pression partielle d'oxygène dans le four est comprise entre 10⁻⁶ et 10⁻¹ atmosphère, la température de recuit est comprise entre 700 DEG. C et 1'250 DEG. C et le temps de recuit est compris généralement entre 30 minutes et 20 heures.

Selon un mode de mise en oeuvre préféré du procédé de l'invention, l'atmosphère dans le four de recuit est l'hydrogène, la pression partielle d'oxygène est comprise entre 10⁻⁴ et 10⁻¹ atmosphère, la température de recuit est comprise entre 900 et 1'150 DEG.C et le temps de recuit est compris entre 4 et 6 heures. On comprendra que la profondeur de la coloration dans la masse de l'article varie proportionnellement avec le temps de recuit.

La couleur de l'article obtenu après l'opération de recuit est orange vif ou à une nuance de couleur comprise entre l'orange et le brun cuivré en fonction des conditions de recuit.

L'article est alors refroidi puis usiné pour obtenir une forme adaptée à son utilisation finale. On notera que la coloration est réalisée dans la masse si bien qu'une opération d'usinage de l'article n'altère aucunement sa couleur.

Enfin, l'article est poli par exemple à l'aide d'une pâte de diamant, l'article ainsi obtenu a un aspect brillant orange vif ou une nuance comprise entre les couleurs citées plus haut en fonction des conditions du recuit de sorte qu'il présente des caractéristiques esthétiques attractives et intéressantes, notamment pour des applications dans le domaine horloger.

Selon un autre exemple de réalisation du procédé de l'invention, on a suivi le mode opératoire décrit précédemment pour réaliser des lunettes de montre circulaires de 45 mm de diamètre et de 4mm d'épaisseur. Dans cet exemple on a utilisé une combinaison de SiO2 (47%), de Al2 03 (40%), et de Li2O (13%) formant un composé dont la proportion en poids de la composition totale est de 0.7%, le mélange formant la phase vitreuse, 6% en poids de CeO2, et le solde soit 93,3% en poids de ZrO2 stabilisée. Une fois configurées dans leur forme finale désirée, les lunettes ont été frittées sous air pendant 2 heures à 1450 DEG.C. Ces lunettes ont ensuite été recuites pendant 12 heures à 1'000 DEG.C dans une atmosphère comprenant 5% d'hydrogène et 95% d'argon. Les lunettes ont été refroidies puis polies miroir. Les lunettes obtenues avaient un aspect brillant orange vif. On a également constaté après rupture d'une lunette que la coloration s'est faite dans la masse.

## Revendications

1. Procédé de fabrication d'un article orange à base de zircone **caractérisé par le fait qu'**il comprend les étapes successives consistant à :
réaliser un premier mélange comprenant.
• une poudre de zircone,
• 3 à 20 % en poids d'au moins un stabilisant choisi parmi l'ensemble des oxydes comprenant l'oxyde d'yttrium, l'oxyde de magnésium, et l'oxyde de calcium seuls ou en combinaison,
• 0,1 % à 5 % en poids d'au moins un élément destiné à réaliser une phase vitreuse, et choisi parmi l'ensemble comprenant de l'oxyde de silicium, de l'oxyde d'aluminium, de l'oxyde lithium et de l'oxyde d'yttrium seuls ou en combinaison,
• 1 % à 6% en poids d'une poudre d'oxyde de cérium;
réaliser un deuxième mélange comprenant ledit premier mélange et un liant;
réaliser un mélange granulé en opérant une granulation dudit deuxième mélange;
former une ébauche en conférant à ce deuxième mélange granulé la forme de l'article désiré;
fritter sous air pendant au moins trente minutes à une température comprise entre 1'250 et 1'500 DEG. C, et
recuire l'article désiré à une température comprise entre 700 DEG. C et 1'350 DEG. C pendant une période comprise entre 30 minutes et 20 heures dans une atmosphère réductrice
polir ladite ébauche frittée.

2. Procédé selon la revendication 1, dans lequel le premier mélange comprend 0,1 à 1 % en poids de poudres destinées à former la phase vitreuse.

3. Procédé selon la revendication 1 ou 2, dans lequel les poudres destinées à réaliser une phase vitreuse comprennent des quantités en poids décroissantes d'oxyde de silicium, d'oxyde d'aluminium, d'oxyde de lithium et d'oxyde d'yttrium.

4. Procédé selon la revendication 3, dans lequel les teneurs décroissantes en poids de l'oxyde de silicium, de l'oxyde d'aluminium et de l'oxyde de lithium sont respectivement de 47%, de 40% et de 13%.

5. Procédé selon l'une des revendications 1 à 4, **caractérisé en ce que** le premier mélange comprend 1 à 6 %, et de préférence 4 à 5 %, en poids de poudre d'oxyde de cérium.

6. Procédé selon l'une quelconque des revendications précédentes, **caractérisé en ce que** le stabilisant est l'oxyde d'yttrium.

7. Procédé selon l'une quelconque des revendications précédentes, **caractérisé en ce que** la température de recuit est comprise entre 700 et 1'350 DEG. C et **en ce que** l'atmosphère réductrice a une pression partielle d'oxygène comprise entre 10⁻⁶ et 10⁻¹ atmosphère.

8. Article décoratif orange à base de zircone obtenu notamment selon le procédé décrit ci-dessus, **caractérisé en ce qu'il** est constitué d'une pièce frittée à partir d'une pièce moulée comprenant en substance une matrice d'oxyde de zirconium, 3 à 20 % en poids d'au moins un stabilisant choisi parmi l'ensemble des oxydes comprenant l'oxyde d'yttrium, l'oxyde de magnésium, l'oxyde de cérium et l'oxyde de calcium et leurs mélange, 0,1 à 5 % en poids d'une phase vitreuse, comprenant de l'oxyde de silicium, de l'oxyde d'aluminium, de l'oxyde lithium, et de l'oxyde d'yttrium et leurs mélanges, et 1 % à 6 % en poids d'oxydes de cérium

9. Article décoratif orange à base de zircone selon la revendication 8, **caractérisé en ce qu'il** est obtenu selon l'une quelconque des revendications 1 à 6.
